# EUROPEAN PATENT APPLICATION

(11) **EP 3 364 064 A1**
(43) Date of publication of application: **22.08.2018**
(21) Application number: 17196919.9
(22) Date of filing: 17.10.2017
(51) Int. Cl.: F16D 48/02, F16D 48/10

(54) **CLUTCH OPERATION DEVICE**

(30) Priority: 28.10.2016 JP 2016211267
(71) Applicant: TOYOTA JIDOSHA KABUSHIKI KAISHA, Toyota-shi, Aichi-ken, 471-8571 (JP)
(72) Inventor: YAMADA, Masanobu, Toyota-shi, Aichi-Ken 471-8571 (JP)
(74) Representative: Cabinet Beau de Loménie

(57) **Abstract**

A clutch operation device includes a clutch actuator, a clutch pedal (91), a first circulation path (330A) and a second circulation path (330B) which adjusts fluid pressure, a switching mechanism (331) which causes a circulation path to switch between the first circulation path and the second circulation path, an electronic control unit (200) which controls the switching mechanism such that a flow path of hydraulic fluid communicating with a fluid pressure chamber switches from the first circulation path to the second circulation path when the electronic control unit determines that there is an occurrence of abnormality in actuation of the clutch actuator, and a communication portion (341, 342, 336, 343) configured to be switchable between a state where the first circulation path and the second circulation path communicate with each other and a state where the first circulation path and the second circulation path are disconnected from each other.

## Description

### BACKGROUND OF THE INVENTION

### 1. Field of the Invention

The invention relates to a clutch operation device operating a clutch device installed in a power transmission path between a driving force source and a gear shifting device in a vehicle.

### 2. Description of Related Art

In the related art, as disclosed in Japanese Unexamined Patent Application Publication No. 2012-112499 (JP 2012-112499 A), there is a known clutch operation device operating a clutch device by using oil pressure of hydraulic oil supplied to the clutch device installed in a power transmission path between an engine (driving force source) and a gear shifting device.

The clutch operation device includes a clutch actuator having a hydraulic cylinder. A clutch pedal stroke sensor detects the operating stroke of a clutch pedal (operating stroke of depressing the clutch pedal) operated by a driver, and the clutch actuator is controlled in accordance with an output signal from the clutch pedal stroke sensor. The oil pressure supplied from the hydraulic cylinder to the clutch device is adjusted by controlling the clutch actuator, so that an engagement state of the clutch device corresponding to the operating amount of the clutch pedal can be obtained. A clutch system including such a clutch operation device is generally called a clutch-by-wire system.

### SUMMARY OF THE INVENTION

In the related art such as a clutch-by-wire system disclosed in JP 2012-112499 A, when there is an occurrence of a malfunction (fail) in a clutch actuator, a clutch pedal stroke sensor, and the like resulting in an occurrence of abnormality in actuation of the clutch actuator, it is not possible to operate a clutch device in accordance with the operating amount of a clutch pedal.

As means for solving the disadvantage, it is possible to consider the following configuration including a first circulation path and a second circulation path. The first circulation path has hydraulic fluid circulated to a fluid pressure chamber of a clutch device in response to actuation of a clutch actuator such that fluid pressure is adjusted. The second circulation path has hydraulic fluid circulated to the fluid pressure chamber in response to operating force of a clutch pedal such that fluid pressure is adjusted. When there is an occurrence of abnormality in actuation of the clutch actuator, a circulation path of hydraulic fluid communicating with the fluid pressure chamber switches from the first circulation path to the second circulation path. Accordingly, even when there is an occurrence of abnormality in actuation of the clutch actuator, the clutch device can be operated in accordance with the operating amount of the clutch pedal by utilizing the second circulation path.

However, in such a configuration in which the circulation path switches when there is an occurrence of abnormality, in a case where the operating amount of the clutch pedal changes during a time period after abnormality occurs until an operation of switching between the circulation paths is performed, there is a possibility that an imbalance will be caused between the quantities of the hydraulic oil (hydraulic fluid) in the reservoir tanks of the hydraulic cylinders respectively provided in the circulation paths.

Specifically, a case will be taken into consideration, the case where an operation of depressing a clutch pedal performed by a driver is cancelled (withdrawn) before the operation of switching between the circulation paths is performed, when there is an occurrence of a malfunction in a clutch actuator in a state where the operation of depressing the clutch pedal is performed by the driver, the clutch actuator is normally actuated, and a clutch device is disengaged. In this case, even when the operation of depressing the clutch pedal is cancelled, the disengagement state of the clutch device is maintained due to the malfunction in the clutch actuator. That is, the clutch device is in a state where hydraulic oil is supplied (state where oil pressure for disengaging the clutch acts). Then, since the operation of depressing the clutch pedal has been already cancelled, when the operation of switching between the circulation paths is performed in the state, the hydraulic oil that has been supplied to the clutch device (hydraulic oil that has been supplied from a hydraulic cylinder in a first circulation path in order to cause the clutch device to be in the disengagement state) is introduced into a second circulation path, so that the hydraulic oil is collected toward a reservoir tank in the second circulation path (clutch pedal side). That is, when there is no occurrence of a malfunction, the hydraulic oil to be returning to the reservoir tank in the first circulation path (clutch actuator side) is collected toward the reservoir tank in the second circulation path (clutch pedal side). In such circumstances, an imbalance is caused between the quantities of the hydraulic oil in the reservoir tanks.

The invention provides a clutch operation device that is able to resolve an imbalance between the quantities of hydraulic oil in reservoir tanks of when there is an occurrence of abnormality in actuation of a clutch actuator.

An aspect of the invention relates to a clutch operation device adjusting fluid pressure inside a fluid pressure chamber of a clutch device installed in a power transmission path between a driving force source and a gear shifting device and causing the clutch device to operate between an engagement state and a disengagement state. The clutch operation device includes a clutch actuator, a clutch pedal, a first circulation path, a second circulation path, a switching mechanism, an electronic control unit, and a communication portion. The clutch pedal is configured to be operated by a driver. The first circulation path is configured to connect to the fluid pressure chamber in response to actuation of the clutch actuator such that hydraulic fluid flows between the first circulation path and the fluid pressure chamber to adjust the fluid pressure. The second circulation path is configured to connect to the fluid pressure chamber in response to operating force of the clutch pedal such that the hydraulic fluid flows between the second circulation path and the fluid pressure chamber to adjust the fluid pressure. The switching mechanism is configured to cause a flow path of hydraulic fluid communicating with the fluid pressure chamber to switch between the first circulation path and the second circulation path. The electronic control unit is configured to control the switching mechanism such that a flow path of hydraulic fluid communicating with the fluid pressure chamber switches from the first circulation path to the second circulation path when the electronic control unit determines that there is an occurrence of abnormality in actuation of the clutch actuator. The communication portion is configured to be switchable between a state where the first circulation path and the second circulation path communicate with each other and a state where the first circulation path and the second circulation path are blocked or disconnected from each other. The electronic control unit is configured to switch the communication portion to the state where the first circulation path and the second circulation path communicate with each other, when the electronic control unit determines that there is an occurrence of abnormality in actuation of the clutch actuator. The electronic control unit is configured to switch the communication portion to the state where the first circulation path and the second circulation path are blocked or disconnected from each other, when a supplying quantity of hydraulic oil (hydraulic fluid) supplied to the clutch device through the first circulation path when abnormality occurs in actuation of the clutch actuator, and a discharging quantity of hydraulic oil (hydraulic fluid) discharged from a hydraulic cylinder provided in the second circulation path toward a reservoir tank of a hydraulic cylinder provided in the first circulation path, become equal to each other.

According to the aspect of the invention, when the electronic control unit determines that there is an occurrence of abnormality in actuation of the clutch actuator, the switching mechanism is controlled such that the flow path of hydraulic fluid communicating with the fluid pressure chamber switches from the first circulation path to the second circulation path. Accordingly, the fluid pressure that can be obtained in response to operating force by which the clutch pedal is depressed by the driver is in a state of being able to be supplied to the fluid pressure chamber of the clutch device, so that the clutch device can be operated. That is, even when there is an occurrence of abnormality in actuation of the clutch actuator, the clutch device can be operated in accordance with the operating amount of the clutch pedal. In this manner, when the flow path of the hydraulic fluid communicating with the fluid pressure chamber switches from the first circulation path to the second circulation path, the communication portion switches to the state where the first circulation path and the second circulation path communicate with each other. Then, the communication portion switches to the state where the first circulation path and the second circulation path are blocked or disconnected from each other when the supplying quantity of the hydraulic oil (hydraulic fluid) supplied to the clutch device through the first circulation path when abnormality occurs, and the discharging quantity of the hydraulic oil (hydraulic fluid) discharged from the hydraulic cylinder provided in the second circulation path to the reservoir tank of the hydraulic cylinder provided in the first circulation path, become equal to each other. Accordingly, the surplus quantity of the hydraulic oil collected in the hydraulic cylinder in the second circulation path from the clutch device in accordance with the switching of the circulation path is discharged to the hydraulic cylinder in the first circulation path. Thus, even when an imbalance is caused between the quantities of the hydraulic oil in the reservoir tanks of the hydraulic cylinders, the imbalance can be resolved.

In the clutch operation device according to the aspect of the invention, the communication portion may be configured to utilize operating force by which the clutch pedal is depressed and to discharge hydraulic oil (hydraulic fluid) from the hydraulic cylinder in the second circulation path toward the reservoir tank of the hydraulic cylinder in the first circulation path via the communication portion when the first circulation path and the second circulation path communicate with each other. The clutch operation device may further include an operation instruction portion configured to instruct a driver of a vehicle to perform the operation of depressing the clutch pedal such that the hydraulic oil (hydraulic fluid) is discharged.

According to the aspect of the invention, when the driver depresses the clutch pedal in response to the operation instruction portion instructing the driver to depress the clutch pedal, the hydraulic oil can be discharged by the operating force from the hydraulic cylinder in the second circulation path toward the reservoir tank provided in the hydraulic cylinder in the first circulation path via the communication portion. Therefore, there is no need to provide any special power source, and when an imbalance is caused between the quantities of the hydraulic oil in the reservoir tanks of the hydraulic cylinders, the imbalance can be resolved.

In the clutch operation device according to the aspect of the invention, the operation instruction portion may be configured to instruct a driver of the vehicle to depress the clutch pedal by an operation stroke of the clutch pedal corresponding to the supplying quantity of hydraulic oil (hydraulic fluid) supplied to the clutch device through the first circulation path when abnormality occurs in actuation of the clutch actuator.

According to the aspect of the invention, the driver can recognize the operation stroke of the clutch pedal in advance when an imbalance between the quantities of the hydraulic oil is resolved. Therefore, the driver stops depressing the clutch pedal in the vicinity of an operation stroke of the clutch pedal operational position, the operation stroke where the imbalance between the quantities of the hydraulic oil is resolved. Thus, it is possible to appropriately obtain the quantities of the hydraulic oil in the reservoir tanks when the communication portion switches to the state where the first circulation path and the second circulation path are blocked or disconnected from each other.

According to the aspect of the invention, compared to a configuration including the first circulation path configured to connect to the fluid pressure chamber in response to actuation of the clutch actuator such that hydraulic fluid flows between the first circulation path and the fluid pressure chamber to adjust the fluid pressure, and the second circulation path configured to connect to the fluid pressure chamber in response to operating force of the clutch pedal such that the hydraulic fluid flows between the second circulation path and the fluid pressure chamber to adjust the fluid pressure, and causing the flow path of hydraulic fluid communicating with the fluid pressure chamber to switch from the first circulation path to the second circulation path when there is an occurrence of abnormality in actuation of the clutch actuator, the communication portion switches to the state where the first circulation path and the second circulation path communicate with each other, when the electronic control unit determines that there is an occurrence of abnormality in actuation of the clutch actuator. The communication portion switches to the state where the first circulation path and the second circulation path are blocked or disconnected from each other, when the supplying quantity of hydraulic oil that is supplied to the clutch device through the first circulation path when abnormality occurs, and the discharging quantity of hydraulic oil flowing from the hydraulic cylinder in the second circulation path toward the reservoir tank of the hydraulic cylinder in the first circulation path, become equal to each other. Therefore, the surplus quantity of the hydraulic oil that has been collected in the hydraulic cylinder in the second circulation path from the clutch device is discharged to the hydraulic cylinder in the first circulation path. Accordingly, even when an imbalance is caused between the quantities of the hydraulic oil in the reservoir tanks of the hydraulic cylinders, the imbalance can be resolved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view illustrating a schematic configuration of a powertrain and a control system of a vehicle in a first embodiment;
FIG. 2 is a view illustrating a schematic configuration of a clutch system in its entirety in the first embodiment;
FIG. 3 is a block diagram illustrating a configuration of the control system related to each ECU in the first embodiment;
FIG. 4 is a flowchart illustrating a part of a procedure of an operation of switching between switching mechanisms and an operation of resolving an imbalance between the quantities of hydraulic oil in the first embodiment;
FIG. 5 is a flowchart illustrating a remaining part of the procedure of the operation of switching between the switching mechanisms and the operation of resolving an imbalance between the quantities of hydraulic oil in the first embodiment;
FIG. 6 is a view illustrating a schematic configuration of a clutch system in its entirety in a second embodiment;
FIG. 7 is a view illustrating a state of a switching valve at the time of being in a limp home mode in the second embodiment; and
FIG. 8 is a view illustrating a state of the switching valve at the time of the operation of resolving an imbalance between the quantities of the hydraulic oil in the second embodiment.

### DETAILED DESCRIPTION OF EMBODIMENTS

Hereinafter, embodiments of the invention will be described based on the drawings. The embodiments will be described regarding a case where the invention is applied to a front engine front drive (FF) vehicle.

### First Embodiment

### Configuration of Powertrain

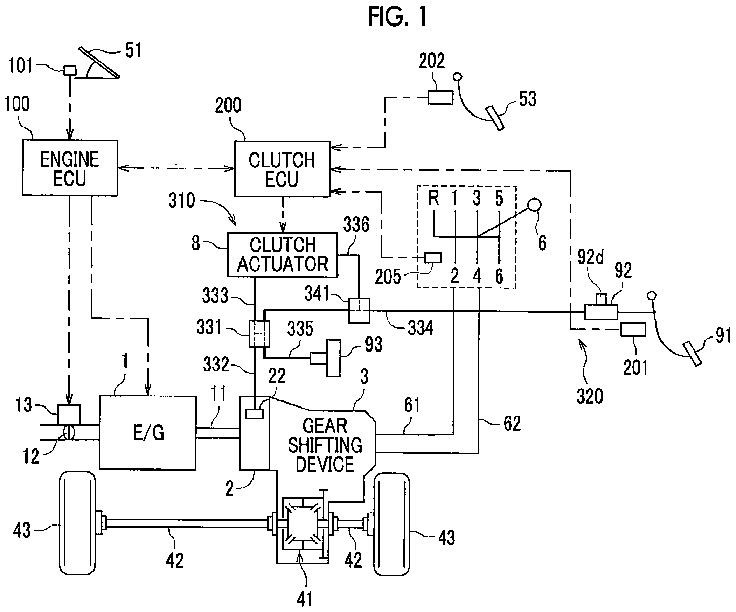

FIG. 1 is a view illustrating a schematic configuration of a powertrain and a control system of a vehicle in a first embodiment. As illustrated in FIG. 1, a clutch device 2 is installed in a power transmission path between a crankshaft 11, that is an output shaft of an engine (driving force source) 1, and a gear shifting device (manual gear shifting device) 3. In addition, an output side of the gear shifting device 3 is interlocked with driving wheels 43 via a differential gear 41 and drive shafts 42.

The engine 1 is an internal combustion engine, for example, a gasoline engine. The engine 1 is controlled by an engine ECU 100.

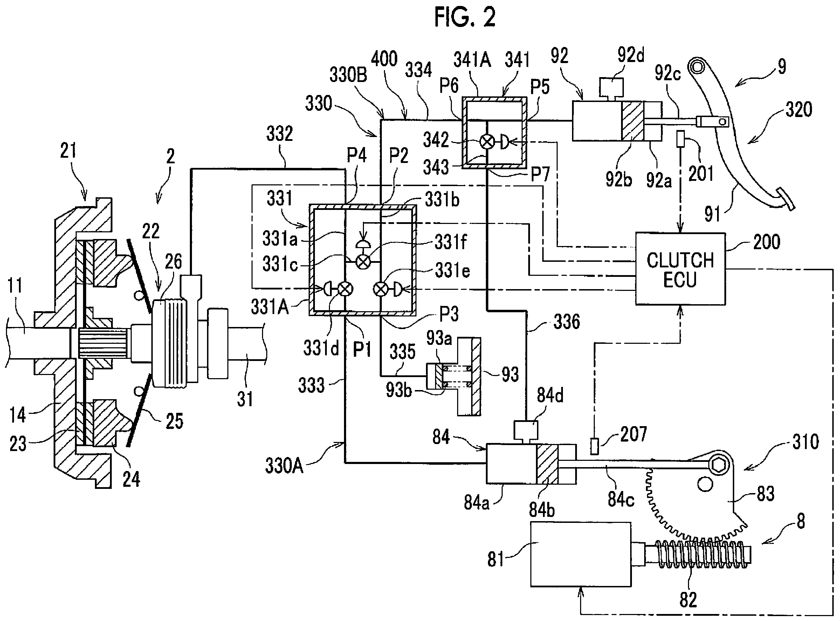

As illustrated in FIG. 2 (view illustrating a schematic configuration of a clutch system in its entirety), the clutch device 2 includes a clutch mechanism 21 and a concentric slave cylinder (hereinafter, will be referred to as CSC) 22. The CSC 22 is actuated in accordance with the oil pressure (fluid pressure of hydraulic fluid) supplied from a clutch oil pressure circuit 330 (will be described later). The CSC 22 operates the clutch mechanism 21.

Specifically, the clutch mechanism 21 includes a clutch disk 23, a pressure plate 24, and a diaphragm spring 25. In addition, the CSC 22 includes a release bearing 26.

The clutch disk 23 is provided at a tip portion of an input shaft 31 of the gear shifting device 3 in a spline fitting manner. In addition, the clutch disk 23 is disposed so as to face a fly wheel 14 fixed to a rear end portion of the crankshaft 11. The pressure plate 24 is disposed between an outer circumferential portion of the diaphragm spring 25 and the clutch disk 23. The diaphragm spring 25 presses the pressure plate 24 toward the clutch disk 23 in a natural state (state where no external force is received). Accordingly, the clutch disk 23 is pressed to the fly wheel 14. The release bearing 26 of the CSC 22 is disposed so as to face an inner circumferential portion of the diaphragm spring 25.

The clutch oil pressure circuit 330 is connected to the CSC 22. The CSC 22 is actuated so as to cause the clutch mechanism 21 to perform engagement, disengagement, or slide engagement by displacing the pressure plate 24 of the clutch mechanism 21 in an axial direction. Specifically, a clutch actuator 8 (will be described later) is actuated in accordance with a clutch control signal from a clutch ECU 200, so that the oil pressure supplied to an oil pressure chamber (fluid pressure chamber, not illustrated) of the CSC 22 from the clutch oil pressure circuit 330 is controlled (operation of when there is no occurrence of a malfunction in the clutch actuator 8 (first operating mechanism 310 (will be described later)) or the like).

In circumstances where there is no occurrence of a malfunction in the clutch actuator 8 and or like (normally actuated), when a clutch disengagement command signal is output from the clutch ECU 200 as a clutch control signal, due to the oil pressure supplied from the clutch oil pressure circuit 330 in accordance with actuation of the clutch actuator 8, the CSC 22 is actuated and the release bearing 26 presses the inner circumferential portion of the diaphragm spring 25. Accordingly, the diaphragm spring 25 is inverted, and pressing force of the pressure plate 24 with respect to the clutch disk 23 is cancelled. As a result, the clutch disk 23 is separated from the fly wheel 14, and the clutch mechanism 21 is disengaged (hereinafter, will be sometimes referred to as disengagement of the clutch device 2).

Meanwhile, when a clutch engagement command signal is output from the clutch ECU 200 as a clutch control signal, the oil pressure supplied from the clutch oil pressure circuit 330 is cancelled in accordance with actuation of the clutch actuator 8. Then, the CSC 22 is actuated and the release bearing 26 retreats from the diaphragm spring 25. Accordingly, the diaphragm spring 25 returns to the natural state, and pressing force of the pressure plate 24 acts with respect to the clutch disk 23. As a result, the clutch disk 23 is pressed to the fly wheel 14, and the clutch mechanism 21 is engaged (hereinafter, will be sometimes referred to as engagement of the clutch device 2).

In this manner, the clutch system is configured to serve as a so-called clutch-by-wire system in which the clutch actuator 8 is actuated in accordance with a clutch control signal from the clutch ECU 200, and the clutch device 2 is operated between an engagement state and a disengagement state in accordance with the actuation. In the clutch-by-wire system, a disengagement operation and an engagement operation of the clutch device 2 can be suitably performed regardless of the operation of a clutch pedal 91 performed by a driver. For example, even when the operation speed of a cancelling operation of depressing the clutch pedal 91 performed by the driver is high, the engagement operation of the clutch device 2 can be performed without causing a shock. In addition, since the clutch device 2 can be disengaged even when the operation of depressing the clutch pedal 91 is not performed by the driver, it is possible to perform free running (momentum travelling in which the vehicle travels in a state where power transmission between the engine 1 and the gear shifting device 3 is blocked, will be described later).

In addition, as a form of outputting a clutch control signal from the clutch ECU 200, there are a case of being output in accordance with an operation of the clutch pedal 91 performed by the driver, and a case of being output with no operation of the clutch pedal 91 performed by the driver. That is, there are a case where a clutch pedal stroke sensor 201 (will be described later) detects an operating amount of the clutch pedal 91 (depressing stroke from a state where the clutch pedal 91 is not operated (operating amount "0")) operated by the driver, and a clutch control signal is output from the clutch ECU 200 in accordance with an output signal from the clutch pedal stroke sensor 201, and a case where a clutch control signal is output from the clutch ECU 200 as in the free running even when no operation of the clutch pedal 91 is performed by the driver. As described above, the operations are performed when there is no occurrence of a malfunction in the clutch actuator 8 or the like. A configuration for coping with a case where there is an occurrence of a malfunction in the clutch actuator 8 or the like, and actuation of when there is an occurrence of a malfunction will be described later.

The gear shifting device 3 is configured to be a known manual gear shifting device (manual transmission) forming a constant mesh-type parallel gear mechanism having a synchromesh mechanism. For example, in the gear shifting device 3, six forward gears and a reverse gear can be in operation. In the gear shifting device 3, when the driver operates a shift lever 6 (refer to FIG. 1), operating force actuates a predetermined synchromesh mechanism (not illustrated) via a selection cable 61 and a shift cable 62. Accordingly, a desired gear (one gear among the six forward gears and the reverse gear) is in operation.

The gear shifting device 3 may have a configuration in which operating force to the shift lever 6 is transmitted to the synchromesh mechanism via a fork shaft and a shift fork. In addition, the gear shifting device 3 may have a configuration that is a so-called automated manual transmission (AMT). In this case, the control system includes ECT-ECU, and actuators (selection actuator and shift actuator) are actuated such that a desired gear is in operation in accordance with a gear shifting control signal output from the ECT-ECU in response to an operation of the shift lever performed by the driver.

In accordance with the gear shifting operation of the gear shifting device 3, rotation of the engine 1 input to the gear shifting device 3 via the clutch device 2 is shifted at a predetermined gear ratio in the gear shifting device 3, and then, the rotation of the engine 1 is transmitted to the driving wheels 43 on the right and left via the differential gear 41 and the drive shafts 42, and the vehicle travels.

### Configuration of Clutch System

As illustrated in FIG. 2, the clutch system according to the embodiment has a configuration in which the clutch device 2, the clutch actuator 8, a clutch pedal unit 9, and a reaction force generating mechanism 93 are connected together via the clutch oil pressure circuit 330.

The clutch oil pressure circuit 330 in the embodiment is provided with a first switching mechanism 331 and a second switching mechanism 341.

First, the first switching mechanism 331 and an oil pressure path connected to the first switching mechanism 331 will be described. The oil pressure chamber in the CSC 22 of the clutch device 2 is connected to the first switching mechanism 331 through a CSC side oil pressure path 332. In addition, the clutch actuator 8 (more specifically, a clutch master cylinder 84 (will be described later) of the clutch actuator 8) is connected to the first switching mechanism 331 through an actuator side oil pressure path 333. In addition, the clutch pedal unit 9 (more specifically, a clutch master cylinder 92 (will be described later) of the clutch pedal unit 9) is connected to the first switching mechanism 331 through a pedal side oil pressure path 334. Moreover, the reaction force generating mechanism 93 is connected to the first switching mechanism 331 through a reaction force generating side oil pressure path 335.

The first switching mechanism 331 has a configuration in which oil passages are formed inside a casing 331A. As the oil passages, specifically, there are provided a first oil passage 331a connecting the CSC side oil pressure path 332 and the actuator side oil pressure path 333 to each other, a second oil passage 331b connecting the pedal side oil pressure path 334 and the reaction force generating side oil pressure path 335 to each other, and a third oil passage 331c connecting the first oil passage 331 a and the second oil passage 331b to each other.

More specifically, the casing 331A of the first switching mechanism 331 is provided with four ports, that is, first to fourth ports P1, P2, P3, P4. The first port P1 and the fourth port P4 are ports to which the first oil passage 331 a leads. The second port P2 and the third port P3 are ports to which the second oil passage 331b leads. The first port P1 communicates with the clutch master cylinder 84 of the clutch actuator 8 via the actuator side oil pressure path 333. The second port P2 communicates with the clutch master cylinder 92 of the clutch pedal unit 9 via the pedal side oil pressure path 334. The third port P3 communicates with the reaction force generating mechanism 93 via the reaction force generating side oil pressure path 335. The fourth port P4 communicates with the oil pressure chamber of the CSC 22 via the CSC side oil pressure path 332.

In addition, a first valve 331d that is freely opened and closed is provided on the actuator side oil pressure path 333 side (first port P1 side) beyond the connection position of the third oil passage 331c in the first oil passage 331a. A second valve 331e that is freely opened and closed is provided on the reaction force generating side oil pressure path 335 side (third port P3 side) beyond the connection position of the third oil passage 331c in the second oil passage 331b. A third valve 331f that is freely opened and closed is provided in the third oil passage 331c. Each of the valves 331d, 331e, 331f is formed of an electromagnetic valve performing an opening-closing operation in response to a valve opening-closing command signal from the clutch ECU 200. In addition, as opening-closing states of the valves 331d, 331e, 331f, when there is no occurrence of a malfunction (normally actuated) in the clutch actuator 8 (first operating mechanism 310 (will be described later)) or the like, the first valve 331d and the second valve 331e are opened and the third valve 331f is closed. That is, the CSC side oil pressure path 332 and the actuator side oil pressure path 333 communicate with each other through the first oil passage 331 a, the pedal side oil pressure path 334 and the reaction force generating side oil pressure path 335 communicate with each other through the second oil passage 331b, and the first oil passage 331 a and the second oil passage 331b are in a state of being blocked (or disconnected) from each other.

Here, configurations of the clutch actuator 8, the clutch pedal unit 9, and the reaction force generating mechanism 93 will be described.

The clutch actuator 8 includes an electric motor 81, a worm gear 82, a worm wheel 83, and the clutch master cylinder 84.

The electric motor 81 is actuated in response to a clutch control signal from the clutch ECU 200. The worm gear 82 is formed in the output shaft of the electric motor 81. In addition, the substantially fan-shaped worm wheel 83 meshes with the worm gear 82. Therefore, the worm wheel 83 turns within a predetermined angle range due to rotation of the worm gear 82 in accordance with actuation of the electric motor 81 (rotation in the positive direction and rotation in the negative direction).

The clutch master cylinder 84 has a configuration in which a piston 84b is assembled inside a cylinder body 84a. Then, a first end portion (left end portion in FIG 2) of a rod 84c is interlocked with the piston 84b, and a second end portion (right end portion in FIG. 2) of the rod 84c is interlocked with the worm wheel 83. The interlock position of the rod 84c with respect to the worm wheel 83 is set to a position slightly deviated from a turning center position of the worm wheel 83. Therefore, the rod 84c is configured to move back and forth in accordance with turning of the worm wheel 83.

When the clutch master cylinder 84 receives turning force, via the rod 84c, from turning of the worm wheel 83 caused in accordance with actuation of the electric motor 81, the piston 84b moves inside the cylinder body 84a. Accordingly, oil pressure is generated. Specifically, when a clutch disengagement command signal is output from the clutch ECU 200, the electric motor 81 is actuated such that the worm wheel 83 turns in the counterclockwise direction in the view. Accordingly, in the clutch master cylinder 84, the piston 84b moves forward inside the cylinder body 84a (moves to the left side in the view), and oil pressure is generated. Then, the oil pressure is supplied to the oil pressure chamber of the CSC 22 via the actuator side oil pressure path 333, the first switching mechanism 331 (first oil passage 331a of the first switching mechanism 331), and the CSC side oil pressure path 332. As a result, the clutch mechanism 21 is disengaged. Meanwhile, when a clutch engagement command signal is output from the clutch ECU 200, the electric motor 81 is actuated such that the worm wheel 83 turns in the clockwise direction in the view. Accordingly, in the clutch master cylinder 84, the piston 84b moves so as to retreat inside the cylinder body 84a (moves to the right side in the view), and the oil pressure that has been supplied to the oil pressure chamber of the CSC 22 is cancelled. As a result, the clutch mechanism 21 is engaged. The cylinder body 84a of the clutch master cylinder 84 is provided with a reservoir tank 84d that stores surplus hydraulic oil inside the cylinder body 84a.

The clutch pedal unit 9 includes the clutch pedal 91 and the clutch master cylinder 92.

The clutch pedal 91 is supported by a clutch pedal bracket (not illustrated) at the position in the vicinity of its upper end so as to freely turn. In addition, biasing force in a turning direction toward the driver side is applied to the clutch pedal 91 by a pedal return spring (not illustrated). The driver can perform the operation of depressing the clutch pedal 91 against the biasing force of the pedal return spring.

The clutch master cylinder 92 has a configuration in which a piston 92b is assembled inside a cylinder body 92a. Then, a first end portion (left end portion in FIG 2) of a rod 92c is interlocked with the piston 92b, and a second end portion (right end portion in FIG. 2) of the rod 92c is interlocked with an intermediate portion of the clutch pedal 91.

When the clutch master cylinder 92 receives operating force from the operation of depressing the clutch pedal 91 performed by the driver, the piston 92b moves inside the cylinder body 92a. Accordingly, oil pressure is generated. The oil pressure generated in the clutch master cylinder 92 is supplied to the reaction force generating mechanism 93 via the pedal side oil pressure path 334, the first switching mechanism 331 (second oil passage 331b of the first switching mechanism 331), and the reaction force generating side oil pressure path 335 (when a hydraulic oil discharge valve 342 (will be described later) of the second switching mechanism 341 is closed). The cylinder body 92a of the clutch master cylinder 92 is provided with a reservoir tank 92d that stores surplus hydraulic oil inside the cylinder body 92a.

The reaction force generating mechanism 93 is configured to generate reaction force with respect to oil pressure supplied via the reaction force generating side oil pressure path 335. For example, a pressure receiving piston 93a and a coil spring 93b are accommodated inside the reaction force generating mechanism 93, and reaction force with respect to the oil pressure is generated due to elastic restoring force of the coil spring 93b. Accordingly, reaction force with respect to operating force of depressing the clutch pedal 91 by the driver is generated. Therefore, the driver can perform the operation of depressing the clutch pedal 91 with depressing in a sense similar to that in the operation of depressing the clutch pedal of the clutch device 2 that does not employ the clutch-by-wire system.

Subsequently, the second switching mechanism 341 that is one of the characteristics of the embodiment, and the oil pressure path connected to the second switching mechanism 341 will be described. The second switching mechanism 341 has a configuration in which oil passages are formed inside a casing 341A. Specifically, a part of the pedal side oil pressure path 334 is inserted through the inside of the casing 341A. In addition, the reservoir tank 84d provided in the clutch master cylinder 84 of the clutch actuator 8, and the second switching mechanism 341 are connected to each other through a hydraulic oil discharge path 336. In addition, inside the casing 341A of the second switching mechanism 341, there is provided a discharge oil passage 343 connecting the pedal side oil pressure path 334 and the hydraulic oil discharge path 336 to each other.

More specifically, the casing 341A of the second switching mechanism 341 is provided with three ports, that are first to third ports P5, P6, P7. The first port P5 is a port to which a path in the pedal side oil pressure path 334 on the clutch master cylinder 92 side leads. In addition, the second port P6 is a port to which a path in the pedal side oil pressure path 334 on the first switching mechanism 331 side leads. In addition, the third port P7 is a port to which the hydraulic oil discharge path 336 leads. That is, the hydraulic oil discharge path 336 is connected to the pedal side oil pressure path 334 via the third port P7 and the discharge oil passage 343.

In addition, the discharge oil passage 343 is provided with the hydraulic oil discharge valve 342 that is freely opened and closed. The hydraulic oil discharge valve 342 is formed of an electromagnetic valve performing an opening-closing operation in response to a valve opening-closing command signal from the clutch ECU 200, similar to the first to third valves 331d, 331e, 331f. In addition, the hydraulic oil discharge valve 342 is in a closed state when there is no occurrence of a malfunction (normally actuated) in the clutch actuator 8 (first operating mechanism 310 (will be described later)) or the like, and the pedal side oil pressure path 334 and the hydraulic oil discharge path 336 are in a blocked state.

### Configuration of Control System

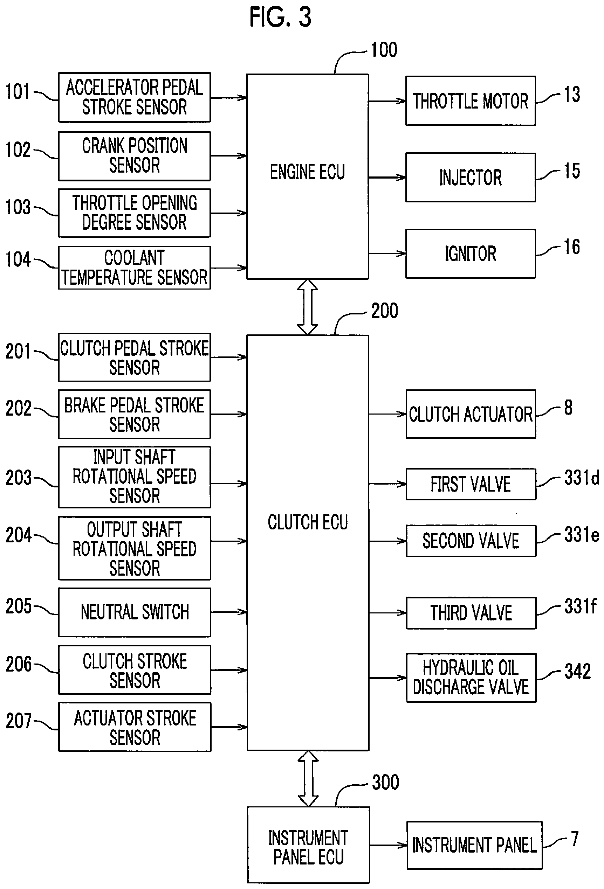

Subsequently, descriptions will be given by using FIG. 3 regarding a configuration of the control system related to each of ECUs (engine ECU, clutch ECU, and instrument panel ECU (ECU for causing an instrument panel 7 inside the vehicle cabin to display various pieces of information)) 100 to 300.

Each of the ECUs 100 to 300 is provided with a microcomputer including a CPU, a ROM, a RAM, a back-up RAM, and the like; and input-output interfaces.

An accelerator pedal stroke sensor 101 outputting a signal corresponding to the operating amount of an accelerator pedal 51 (refer to FIG 1), a crank position sensor 102 outputting a signal corresponding to a rotation angle position of the crankshaft 11, a throttle opening degree sensor 103 outputting a signal corresponding to an opening degree of a throttle valve 12 provided in an intake system of the engine 1, a coolant temperature sensor 104 outputting a signal corresponding to a temperature of a coolant in the engine 1, and the like are connected to the input interface of the engine ECU 100.

A throttle motor 13, an injector 15, an ignitor 16 of an ignition plug, and the like are connected to the output interface of the engine ECU 100.

The engine ECU 100 detects a running state of the engine 1 based on various pieces of information input from each of the sensors. The engine ECU 100 controls the throttle motor 13 (controls an intake amount), controls the injector 15 (controls fuel injection), and controls the ignitor 16 (controls an ignition time), thereby generally controlling running of the engine 1.

The clutch pedal stroke sensor 201 outputting a signal corresponding to the operating amount of the clutch pedal 91, a brake pedal stroke sensor 202 outputting a signal corresponding to an operating amount of a brake pedal 53, an input shaft rotational speed sensor 203 outputting a signal corresponding to an input shaft rotational speed of the gear shifting device 3, an output shaft rotational speed sensor 204 outputting a signal corresponding to an output shaft rotational speed of the gear shifting device 3, a neutral switch 205 detecting that an operational position of the shift lever 6 is at a neutral position, a clutch stroke sensor 206 detecting a clutch stroke in the clutch device 2 (for example, detecting a slide movement position of the release bearing 26 of the CSC 22), an actuator stroke sensor 207 detecting a clutch stroke of the clutch actuator 8 (for example, detecting a slide movement position of the rod 84c), and the like are connected to the input interface of the clutch ECU 200.

The clutch actuator 8 and each of the valves 331d, 331e, 331f, 342 are connected to the output interface of the clutch ECU 200.

The instrument panel 7 provided with various meters, indicator lamps, and the like is connected to the output interface of the instrument panel ECU 300 controlling display of various pieces of information in the instrument panel 7 installed in front of a driver's seat inside the vehicle cabin. The instrument panel ECU 300 outputs a display command signal for causing the instrument panel 7 to display a vehicle speed, to display an engine rotational speed, and to display other lamps (indicator lamps and the like) to the instrument panel 7. In addition, particularly, the instrument panel ECU 300 in the embodiment is configured to output a clutch operation command signal for causing a display panel in the instrument panel 7 to perform displaying, urging the driver to operate the clutch pedal 91. The displaying urging the driver to operate the clutch pedal 91 will be described later.

The engine ECU 100, the clutch ECU 200, and the instrument panel ECU 300 are connected together through bi-directional buses such that communication of bi-directionally transceiving demanded information is performed.

### Free Running

Here, descriptions will be given regarding the free running that is one of travelling states of the vehicle.

The free running denotes a state of momentum travelling in which the clutch device 2 is disengaged while the vehicle is travelling. In the free running, since braking force (so-called engine brake) caused due to snatching the engine 1 is not generated, a momentum travelling distance can be lengthened, and the fuel consumption rate of the engine 1 can be improved. In addition, as the travelling states in the free running, there are a case where the engine 1 is driven (driven approximately at an idling rotational speed), and a case where the engine 1 is stopped (fuel injection from the injector 15 is stopped and an ignition operation of the ignition plug is stopped, so that the rotational speed of the engine 1 becomes "0").

A condition for starting the free running is fulfilled when a state where none of the accelerator pedal 51, the brake pedal 53, and the clutch pedal 91 is subjected to a depressing operation while the vehicle is travelling (state where the operating amount is "0" or substantially "0") continues for a predetermined time (for example, approximately for three seconds) and the vehicle speed is equal to or greater than a predetermined value. In addition, a condition for ending the free running is fulfilled when a depressing operation of at least one of the accelerator pedal 51, the brake pedal 53, and the clutch pedal 91 is performed during the free running, or when the vehicle speed is reduced less than a predetermined value.

A control operation of starting and ending the free running (controlling the free running) is executed by the engine ECU 100 and the clutch ECU 200.

### Clutch Control

Incidentally, in the clutch-by-wire system in the related art disclosed in JP 2012-112499 A, when there is a malfunction in the clutch actuator, the clutch pedal stroke sensor, and the like (when there is an occurrence of abnormality in actuation of the clutch actuator), the clutch device 2 cannot be operated in accordance with the operating amount of the clutch pedal. For example, when there is an occurrence of a malfunction in a state where the oil pressure is supplied to the clutch device 2 (clutch device 2 is in the disengagement state), even when the driver cancels the operation of depressing the clutch pedal, the engagement operation of the clutch device 2 cannot be performed.

The embodiment is configured to be able to operate the clutch device 2 in accordance with the operating amount of the clutch pedal 91 even when there is an occurrence of a malfunction.

Specifically, when there is no occurrence of a malfunction in the clutch actuator 8, the clutch pedal stroke sensor 201, or the like (there is no occurrence of abnormality in actuation of the clutch actuator 8), as described above, both the first valve 331 d and the second valve 331e in the first switching mechanism 331 are opened, and the third valve 331f is closed. That is, the fourth port P4 is in a state of communicating with only the first port P1 among the ports. The second port P2 is in a state of communicating with only the third port P3 among the ports. Accordingly, the CSC side oil pressure path 332 and the actuator side oil pressure path 333 are in a state of communicating with each other by the first oil passage 331a. The pedal side oil pressure path 334 and the reaction force generating side oil pressure path 335 are in a state of communicating with each other by the second oil passage 331b. In this case, as described above, the clutch device 2 can be operated by supplying the oil pressure, which is generated in the clutch master cylinder 84 in accordance with actuation of the clutch actuator 8, to the oil pressure chamber of the CSC 22.

Meanwhile, when there is an occurrence of a malfunction in the clutch actuator 8, the clutch pedal stroke sensor 201, or the like (there is an occurrence of abnormality in actuation of the clutch actuator 8), both the first valve 331d and the second valve 331e are closed, and the third valve 331 f is opened. That is, the fourth port P4 is in a state of communicating with only the second port P2 among the ports. The first port P1 and the third port P3 are in a state of being blocked (or disconnected) from all of the ports. Accordingly, the CSC side oil pressure path 332 and the pedal side oil pressure path 334 communicate with each other via the third oil passage 331c. Each of the actuator side oil pressure path 333 and the reaction force generating side oil pressure path 335 is in a state of being blocked (or disconnected) from other oil pressure paths. In this case, the clutch device 2 can be operated by supplying the oil pressure, which is generated in the clutch master cylinder 92 in accordance with operating force of the clutch pedal 91 generated by the driver, to the oil pressure chamber of the CSC 22.

Due to the configuration, the first operating mechanism 310 is configured to have the clutch actuator 8 and the clutch oil pressure circuit 330 (the actuator side oil pressure path 333 and the CSC side oil pressure path 332). That is, when there is no occurrence of a malfunction in the clutch actuator 8, the clutch pedal stroke sensor 201, or the like, the oil pressure to be supplied to the oil pressure chamber of the CSC 22 is adjusted by the first operating mechanism 310, and the clutch device 2 is operated. In this manner, the first operating mechanism 310 adjusts the oil pressure (fluid pressure) in response to actuation of the clutch actuator 8, so that the clutch device 2 is operated. Therefore, a first circulation path 330A (first circulation path having hydraulic fluid circulated to the fluid pressure chamber in response to actuation of the clutch actuator and adjusting the fluid pressure) is configured to include the actuator side oil pressure path 333, the CSC side oil pressure path 332, and the clutch master cylinder 84.

Meanwhile, a second operating mechanism 320 is configured to include the clutch pedal unit 9 and the clutch oil pressure circuit 330 (the pedal side oil pressure path 334 and the CSC side oil pressure path 332). That is, when there is an occurrence of a malfunction in the clutch actuator 8, the clutch pedal stroke sensor 201, or the like, the oil pressure to be supplied to the oil pressure chamber of the CSC 22 is adjusted by the second operating mechanism 320, and the clutch device 2 is operated. In this manner, the second operating mechanism 320 supplies the oil pressure (fluid pressure) to the clutch device 2 in response to operating force of the clutch pedal 91 generated by the driver, so that the clutch device 2 is operated. Therefore, a second circulation path 330B (second circulation path having hydraulic fluid circulated to the fluid pressure chamber in response to operating force of the clutch pedal and adjusting the fluid pressure) is configured to include the pedal side oil pressure path 334, the CSC side oil pressure path 332, and the clutch master cylinder 92.

In this manner, due to opening-closing operations of the first to third valves 331d, 331e, 331f, the first switching mechanism 331 switches such that each of the oil pressure paths (circulation paths of hydraulic fluid) in the clutch oil pressure circuit 330 changes between a state where the clutch device 2 is operated by the first operating mechanism 310 and a state where the clutch device 2 is operated by the second operating mechanism 320. In other words, the first switching mechanism 331 can cause the circulation path of hydraulic fluid communicating with the oil pressure chamber (fluid pressure chamber) of the CSC 22 to switch between the first circulation path 330A and the second circulation path 330B.

A switching operation of the first switching mechanism 331 is executed by the clutch ECU 200. Therefore, in the clutch ECU 200, a functional portion of executing switching control of the first switching mechanism 331 is configured to serve as an electronic control unit 200 (electronic control unit that controls the switching mechanism such that the circulation path of hydraulic fluid communicating with the fluid pressure chamber switches from the first circulation path to the second circulation path, when the electronic control unit determines that there is an occurrence of abnormality in actuation of the clutch actuator 8).

In addition, when the hydraulic oil discharge valve 342 is opened, the pedal side oil pressure path 334 and the hydraulic oil discharge path 336 communicate with each other. Therefore, the second switching mechanism 341, the hydraulic oil discharge valve 342, the hydraulic oil discharge path 336, the discharge oil passage 343 respectively configure the communication portions 341, 342, 336, 343 (communication portions that are switchable between a state where the first circulation path and the second circulation path communicate with each other and a state where the first circulation path and the second circulation path are blocked from each other).

Incidentally, as described above, in a configuration of switching between the operating mechanisms 310, 320 (switching between the circulation paths 330A, 330B) when there is an occurrence of a malfunction in the clutch actuator 8, the clutch pedal stroke sensor 201, or the like and when there is an occurrence of abnormality in actuation of the clutch actuator 8, in a case where the operating amount of the clutch pedal 91 changes during a time period after abnormality occurs until an operation of switching between the circulation paths 330A, 330B is performed, there is a possibility that an imbalance will be caused between the quantities of the hydraulic oil in the reservoir tanks 84d, 92d of the clutch master cylinders 84, 92.

Specifically, a case will be taken into consideration, the case where the operation of depressing the clutch pedal 91 performed by the driver is cancelled (withdrawn) before the operation of switching between the circulation paths 330A, 330B is performed, when there is an occurrence of a malfunction in the clutch actuator 8 in a state where the operation of depressing the clutch pedal 91 performed by the driver, the clutch actuator 8 is normally actuated, and the clutch device 2 is disengaged. In this case, even when the operation of depressing the clutch pedal 91 is cancelled, the disengagement state of the clutch device 2 is maintained due to the malfunction in the clutch actuator 8. That is, the clutch device 2 is in a state where hydraulic oil is supplied (state where oil pressure for disengaging the clutch acts). Then, since the operation of depressing the clutch pedal 91 has been already cancelled, when the operation of switching between the circulation paths 330A, 330B is performed in the state, the hydraulic oil that has been supplied to the clutch device 2 (hydraulic oil that has been supplied from the clutch master cylinder 84 in the first circulation path 330A in order to cause the clutch device 2 to be in the disengagement state) is introduced into the second circulation path 330B, so that the hydraulic oil is collected toward the reservoir tank 92d in the second circulation path 330B (clutch pedal 91 side). That is, when there is no occurrence of a malfunction, the hydraulic oil to be returning to the reservoir tank 84d in the first circulation path 330A (clutch actuator 8 side) is collected toward the reservoir tank 92d in the second circulation path 330B (clutch pedal 91 side).

Even when there is an occurrence of a malfunction in the clutch actuator 8 in the middle of cancelling the operation of depressing the clutch pedal 91 performed by the driver from a state where the clutch actuator 8 is normally actuated and the clutch device 2 is disengaged, in a case where the operating amount of the clutch pedal 91 changes during a time period after the malfunction occurs until the operation of switching between the circulation paths 330A, 330B is performed (when an operation of withdrawing the clutch pedal 91 proceeds), the hydraulic oil that has been supplied to the clutch device 2 is collected in the reservoir tank 92d in the second circulation path 330B (clutch pedal 91 side) when the operation of switching between the circulation paths 330A, 330B is performed thereafter.

In such circumstances, an imbalance is caused between the quantities of the hydraulic oil in the reservoir tanks 84d, 92d. Therefore, as the maintenance work to be performed after a malfunction occurs, in addition to replacing the clutch actuator 8, there is a need to replace the clutch master cylinder 92 on the clutch pedal 91 side, so that the maintenance work becomes complicated. Particularly, in a structure in which the clutch pedal 91 and the clutch master cylinder 92 are integrally formed, the clutch pedal 91 also has to be replaced when the clutch master cylinder 92 is replaced. Accordingly, the maintenance work becomes particularly complicated.

Therefore, according to the embodiment, it is possible to resolve an imbalance between the quantities of the hydraulic oil in the reservoir tanks 84d, 92d of when there is an occurrence of a malfunction.

Specifically, when the electronic control unit 200 determines that there is an occurrence of abnormality in actuation of the clutch actuator 8, the hydraulic oil discharge valve 342 is opened such that the first circulation path 330A and the second circulation path 330B communicate with each other. The hydraulic oil discharge valve 342 is closed when the supplying quantity of hydraulic oil that has been supplied to the clutch device 2 through the first circulation path 330A when abnormality occurs in actuation of the clutch actuator 8, and the discharging quantity of hydraulic oil flowing from the clutch master cylinder 92 in the second circulation path 330B toward the reservoir tank 84d provided in the clutch master cylinder 84 in the first circulation path 330A, become equal to each other such that the first circulation path 330A and the second circulation path 330B are blocked from each other.

More specifically, the supplying quantity of the hydraulic oil, which has been supplied from the clutch master cylinder 84 in the first circulation path 330A to the oil pressure chamber of the CSC 22 when the electronic control unit 200 determines that there is an occurrence of abnormality in actuation of the clutch actuator 8, becomes the surplus quantity of the hydraulic oil to be collected in the clutch master cylinder 92 in the second circulation path 330B, after the operation of switching between the circulation paths 330A, 330B is performed (after switching from the state where the clutch device 2 is operated by the first operating mechanism 310 to the state where the clutch device 2 is operated by the second operating mechanism 320). After the surplus quantity of the hydraulic oil is calculated and the operation of switching between the circulation paths 330A, 330B is performed, the hydraulic oil discharge valve 342 is opened, and the hydraulic oil discharge valve 342 is closed when the discharging quantity of the hydraulic oil flowing toward the clutch master cylinder 84 (reservoir tank 84d) in the first circulation path 330A through the second circulation path 330B becomes equal to the amount of the surplus quantity of the hydraulic oil.

In addition, in the embodiment, as the power for causing the hydraulic oil to flow from the second circulation path 330B toward the clutch master cylinder 84 in the first circulation path 330A, operating force of the clutch pedal 91 generated by the driver is utilized. That is, "the communication portion has a configuration in which operating force generated through the operation of depressing the clutch pedal is utilized in a state where the first circulation path and the second circulation path communicate with each other, and hydraulic oil is discharged from the hydraulic cylinder in the second circulation path toward the reservoir tank of the hydraulic cylinder in the first circulation path via the communication portion".

Accordingly, the surplus quantity of the hydraulic oil that has been collected in the clutch master cylinder 92 in the second circulation path 330B from the clutch device 2 in accordance with the switching between the circulation paths 330A, 330B is discharged to the clutch master cylinder 84 in the first circulation path 330A. Thus, even when an imbalance is caused between the quantities of the hydraulic oil in the reservoir tanks 92d, 84d of the clutch master cylinders 92, 84, the imbalance can be resolved.

An operation of the hydraulic oil discharge valve 342 for resolving such an imbalance between the quantities of the hydraulic oil is performed by the clutch ECU 200. Therefore, in the clutch ECU 200, a functional portion executing an operation of the hydraulic oil discharge valve 342 is configured to serve as the electronic control unit 200 (electronic control unit that causes the communication portion to switch to the state where the first circulation path and the second circulation path communicate with each other when the electronic control unit determines that there is an occurrence of abnormality in actuation of the clutch actuator, and causes the communication portion to switch to the state where the first circulation path and the second circulation path are blocked from each other, when the supplying quantity of the hydraulic oil that has been supplied to the clutch device through the first circulation path when there is an occurrence of abnormality in actuation of the clutch actuator, and the discharging quantity of the hydraulic oil flowing from the hydraulic cylinder provided in the second circulation path toward the reservoir tank of the hydraulic cylinder in the first circulation path, become equal to each other).

In this manner, a clutch operation device 400 is configured to include each of the circulation paths 330A, 330B, the first switching mechanism 331, each of the members configuring the communication portion (the second switching mechanism 341, the hydraulic oil discharge valve 342, the hydraulic oil discharge path 336, and the discharge oil passage 343), the electronic control unit (the clutch ECU 200) for switching the valves 331d to 331f, 342, and the like.

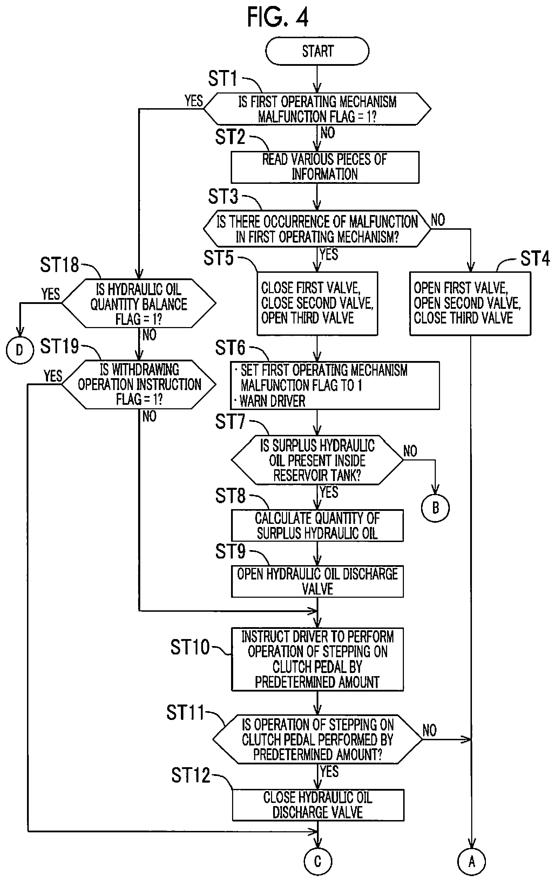

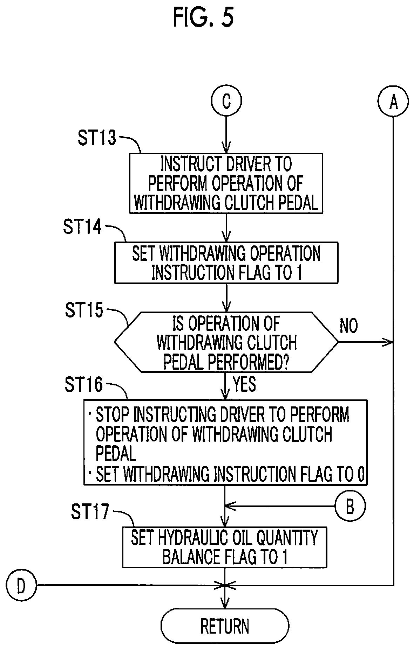

Subsequently, a procedure of the operation of switching between the switching mechanisms 331, 341 and an operation of resolving an imbalance between the quantities of hydraulic oil will be described in regards to the flowchart in FIGS. 4 and 5. The procedure in the flowchart is repetitively executed every predetermined time. Before the vehicle starts travelling (for example, when the engine 1 starts), all of flags (first operating mechanism malfunction flag, withdrawing operation instruction flag, and hydraulic oil quantity balance flag; will be described later) are reset to "0".

First, in Step ST1, the clutch ECU 200 determines whether or not the first operating mechanism malfunction flag stored in the clutch ECU 200 in advance is set to "1". The first operating mechanism malfunction flag is set to "1" when the clutch ECU 200 determines that there is an occurrence of a malfunction in the first operating mechanism 310.

Before the vehicle starts travelling, the first operating mechanism malfunction flag is reset to "0". Thus, the determination result in Step ST1 becomes NO, and the procedure proceeds to Step ST2. In Step ST2, various pieces of information (output signals) are read from each of the sensors. For example, information on the operating amount of the accelerator pedal 51 from the accelerator pedal stroke sensor 101, information on the operating amount of the clutch pedal 91 from the clutch pedal stroke sensor 201, information on the operating amount of the brake pedal 53 from the brake pedal stroke sensor 202, information on the clutch stroke of the clutch device 2 from the clutch stroke sensor 206, and information on the clutch stroke of the clutch actuator 8 from the actuator stroke sensor 207.

Thereafter, the procedure proceeds to Step ST3, and the clutch ECU 200 determines whether or not there is an occurrence of a malfunction in the first operating mechanism 310. As an example of the determination, when the vehicle is not performing the free running (when the condition for starting the free running is not fulfilled), the operating amount of the clutch pedal 91 obtained through an output signal from the clutch pedal stroke sensor 201, and the clutch stroke in the clutch device 2 obtained through an output signal from the clutch stroke sensor 206 are compared to each other. Then, when there is a gap exceeding a permissible range between the operating amount and the clutch stroke, there is a possibility of an occurrence of a malfunction in the clutch actuator 8 or a malfunction in the clutch pedal stroke sensor 201. Therefore, the clutch ECU 200 determines that there is an occurrence of a malfunction in the first operating mechanism 310, and the determination result in Step ST3 becomes YES. The permissible range for the gap between the operating amount and the clutch stroke is set in advance based on an experiment or a simulation. In addition, when the vehicle is not performing the free running, the operating amount of the clutch pedal 91 obtained through an output signal from the clutch pedal stroke sensor 201, and the clutch stroke of the clutch actuator 8 obtained through an output signal from the actuator stroke sensor 207 are compared to each other. When there is a gap exceeding the permissible range between the operating amount and the clutch stroke, the clutch ECU 200 may determine that there is an occurrence of a malfunction such that the determination result in Step ST3 becomes YES.

The determination operation in Step ST3 can be performed in the circumstances where the operating amount of the clutch pedal 91 slightly changes. For example, when the driver starts the operation of depressing the clutch pedal 91, the clutch ECU 200 determines whether or not there is an occurrence of a malfunction, based on the output signals from each of the sensors when the depressing amount (stroke) reaches approximately 20% of the total depressing amount (stroke) (100% in depressing rate) of the clutch pedal 91. That is, the clutch ECU 200 determines whether or not there is an occurrence of a malfunction, in a state where room for depressing the clutch pedal 91 remains. The reason is that, as described below, when the state shifts from the state where the clutch device 2 is operated by the first operating mechanism 310 to the state where the clutch device 2 is operated by the second operating mechanism 320, oil pressure (oil pressure for performing a disengagement operation of the clutch device 2; oil pressure generated by the clutch master cylinder 92) can be generated through the operation of depressing the clutch pedal 91 (additional depressing operation).

In addition, the clutch ECU 200 may determine whether or not there is an occurrence of a malfunction in the first operating mechanism 310 by comparing the clutch control signal output to the clutch actuator 8, and the clutch stroke in the clutch device 2 obtained through the output signal from the clutch stroke sensor 206 or the clutch stroke of the clutch actuator 8 obtained through the output signal from the actuator stroke sensor 207 to each other. In the determination operation, regardless of the presence or absence of the execution of the free running, the clutch ECU 200 can determine whether or not there is an occurrence of a malfunction in the first operating mechanism 310.

When there is no occurrence of a malfunction in the first operating mechanism 310 and the determination result in Step ST3 is NO, the procedure proceeds to Step ST4. Then, both the first valve 331 d and the second valve 331e are opened, the third valve 331f is closed, and the procedure returns to the starting step. That is, as described above, the CSC side oil pressure path 332 and the actuator side oil pressure path 333 are in a state of communicating with each other through the first oil passage 331 a, the pedal side oil pressure path 334 and the reaction force generating side oil pressure path 335 are in a state of communicating with each other through the second oil passage 331b, and the first oil passage 331a and the second oil passage 331b are in a state of being blocked from each other. That is, the clutch device 2 is in a state of being operated by the first operating mechanism 310. Therefore, in the circumstances where there is no occurrence of a malfunction in the first operating mechanism 310 (determination result in Step ST3 is NO), until a malfunction occurs in the first operating mechanism 310 (until the determination result in Step ST3 becomes YES), the operation from Steps ST1 to ST4 is repetitively performed, and the state where the clutch device 2 is operated by the first operating mechanism 310 continues.

Meanwhile, when there is an occurrence of a malfunction in the first operating mechanism 310, the determination result in Step ST3 becomes YES, and the procedure proceeds to Step ST5. In Step ST5, both the first valve 331d and the second valve 331e are closed, and the third valve 331f is opened. That is, the first oil passage 331a (oil passage on the fourth port P4 side beyond the first valve 331d in the first oil passage 331a) and the second oil passage 331b (oil passage on the second port P2 side beyond the second valve 331e in the second oil passage 331b) are in a state of communicating with each other by the third oil passage 331c. That is, the CSC side oil pressure path 332 and the pedal side oil pressure path 334 are in a state of communicating with each other. In addition, the CSC side oil pressure path 332 and the actuator side oil pressure path 333 are in a state of being blocked from each other, and the pedal side oil pressure path 334 and the reaction force generating side oil pressure path 335 are in a state of being blocked from each other.

In this case, as the switching timing of the valves 331d, 331e, 331f, each of the valves switches at the same time. In addition, the first valve 331d may switch before the second valve 331e and the third valve 331f (the first valve 331d may be closed first). In this case, since the CSC side oil pressure path 332 and the actuator side oil pressure path 333 are blocked first, other valves 331e, 331f switch in a state where the oil pressure of the CSC side oil pressure path 332 is temporarily held. Therefore, fluctuation in the oil pressure can be restrained, and the torque capacity of the clutch device 2 can be stabilized.

In this manner, in a state where each of the valves 331d, 331e, 331f switches, the clutch device 2 is in a state of being operated by the second operating mechanism 320. That is, the clutch device 2 can be operated by supplying the oil pressure obtained from operating force of the clutch pedal 91 generated by the driver to the clutch device 2. In this manner, even when there is an occurrence of a malfunction (even when there is an occurrence of a malfunction in the first operating mechanism 310), the clutch device 2 can be operated in accordance with the operating amount of the clutch pedal 91. Regarding the quantity of the hydraulic oil demanded for obtaining a movement stroke of the release bearing 26 causing the clutch device 2 to shift from the engagement state to the disengagement state, the quantity of when the clutch device 2 is operated by the first operating mechanism 310, and the quantity of when the clutch device 2 is operated by the second operating mechanism 320 are substantially the equal to each other.

Thereafter, the procedure proceeds to Step ST6, and the first operating mechanism malfunction flag is set to "1". In addition, a malfunction indicator light (MIL) in the instrument panel 7 inside the vehicle cabin is lit such that the driver is warned (warned that there is an occurrence of a malfunction in the first operating mechanism 310), and malfunction information is written in a diagnosis provided in the clutch ECU 200.

In this manner, in a state where the first switching mechanism 331 switches (switches from the state where the clutch device 2 is operated by the first operating mechanism 310 to the state where the clutch device 2 is operated by the second operating mechanism 320), the procedure proceeds to Step ST7, and the clutch ECU 200 determines whether or not surplus hydraulic oil is present inside the reservoir tank 92d of the second operating mechanism 320. The determination is made as follows.

As described above, when a malfunction occurs in the clutch actuator 8 in a state where the operation of depressing the clutch pedal 91 performed by the driver, the clutch actuator 8 is normally actuated, and the clutch device 2 is disengaged, in a case where the operation of depressing the clutch pedal 91 performed by the driver is cancelled (withdrawn) before the operation of switching between the operating mechanisms 310, 320 is performed, the hydraulic oil that has been supplied to the clutch device 2 (hydraulic oil that has been supplied from the clutch master cylinder 84 of the first operating mechanism 310 in order to cause the clutch device 2 to be in the disengagement state) is introduced into an oil pressure circuit of the second operating mechanism 320, and the hydraulic oil is collected in the reservoir tank 92d of the second operating mechanism 320 (clutch pedal 91). That is, surplus hydraulic oil is present in the reservoir tank 92d, and an imbalance is caused between the quantities of the hydraulic oil in the reservoir tanks 84d, 92d. Therefore, the clutch ECU 200 determines whether or not the amount of withdrawing the clutch pedal 91 has changed during a time period from the time point when a malfunction occurs in the clutch actuator 8 until the operation of switching between the operating mechanisms 310, 320 is completed, so that the clutch ECU 200 can determine whether or not surplus hydraulic oil is present inside the reservoir tank 92d of the second operating mechanism 320. Specifically, the time after the clutch ECU 200 outputs a valve opening-closing command signal until a switching operation of the valves 331d, 331e, 331f is actually completed is measured through an experiment or the like. During a time period after the valve opening-closing command signal is output in Step ST5 until the time (time until a switching operation of the valves 331d, 331e, 331f is completed) elapses, the clutch ECU 200 determines whether or not the operating amount of the clutch pedal 91 obtained through an output signal from the clutch pedal stroke sensor 201 has changed in a withdrawing direction, so that the clutch ECU 200 can determine whether or not surplus hydraulic oil is present inside the reservoir tank 92d of the second operating mechanism 320.

When no surplus hydraulic oil is present inside the reservoir tank 92d of the second operating mechanism 320, and the determination result in Step ST7 is NO (when the amount of withdrawing the clutch pedal 91 has not changed during the time period, and no surplus hydraulic oil is present), the procedure proceeds to Step ST17. Then, the hydraulic oil quantity balance flag stored in the clutch ECU 200 in advance is set to "1", and the procedure returns to the starting step. The hydraulic oil quantity balance flag is set to "1" when the quantities of the hydraulic oil in the reservoir tanks 84d, 92d are in a balanced state (state where the quantities of the hydraulic oil stored in the reservoir tanks 84d, 92d are substantially equal to each other), and the hydraulic oil quantity balance flag is reset to "0" when an imbalance is caused between the quantities of the hydraulic oil. As described above, when the amount of withdrawing the clutch pedal 91 has not changed during the time period, no surplus hydraulic oil is present. Therefore, the quantities of the hydraulic oil in the reservoir tanks 84d, 92d are balanced, and the hydraulic oil quantity balance flag is set to "1" in Step ST17.

Meanwhile, when surplus hydraulic oil is present inside the reservoir tank 92d of the second operating mechanism 320, and the determination result in Step ST7 is YES, the procedure proceeds to Step ST8, and the quantity of the surplus hydraulic oil inside the reservoir tank 92d is calculated. The quantity of the surplus hydraulic oil can be calculated based on the operating amount of withdrawing the clutch pedal 91 performed by the driver before the operation of switching between the operating mechanisms 310, 320 is performed, when a malfunction occurs in the clutch actuator 8 in a state where the operation of depressing the clutch pedal 91 performed by the driver, the clutch actuator 8 is normally actuated, and the clutch device 2 is disengaged. Specifically, during the time period after the valve opening-closing command signal is output in Step ST5 until the time

(time until a switching operation of the valves 331d, 331e, 331f is completed) elapses, as the operating amount of when the operating amount of the clutch pedal 91 obtained through an output signal from the clutch pedal stroke sensor 201 changes in the withdrawing direction increases, the quantity of the surplus hydraulic oil inside the reservoir tank 92d of the second operating mechanism 320 can be obtained as a greater value. For example, the relationship of the case between the operating amount of the clutch pedal 91 in the withdrawing direction and the quantity of the surplus hydraulic oil inside the reservoir tank 92d is obtained in advance through an experiment or a simulation, and the relationship is mapped and stored in the ROM of the clutch ECU 200. Then, when there is surplus hydraulic oil, the operating amount of the clutch pedal 91 in the withdrawing direction is applied to the map, so that the quantity of the surplus hydraulic oil inside the reservoir tank 92d is extracted.

In this manner, after the quantity of the surplus hydraulic oil inside the reservoir tank 92d is calculated, the procedure proceeds to Step ST9, and the hydraulic oil discharge valve 342 is opened. Accordingly, the pedal side oil pressure path 334 is in a state of communicating with the hydraulic oil discharge path 336 via the second switching mechanism 341. That is, the clutch master cylinder 92 of the second operating mechanism 320 is in a state of communicating with the reservoir tank 84d of the first operating mechanism 310. In such a state, when oil pressure is generated inside the clutch master cylinder 92, the hydraulic oil inside the clutch master cylinder 92 can be introduced into the reservoir tank 84d of the first operating mechanism 310.

In such a state, in Step ST10, the display panel in the instrument panel 7 performs displaying, urging the driver to perform the operation of depressing the clutch pedal 91 by a predetermined amount. That is, the driver is urged to perform the operation of depressing the clutch pedal 91 for discharging the hydraulic oil inside the clutch master cylinder 92 toward the reservoir tank 84d of the clutch master cylinder 84 by the quantity of the surplus hydraulic oil. The predetermined amount as the operating amount of depressing the clutch pedal 91 to be displayed in this case has a value corresponding to the quantity of the surplus hydraulic oil. For example, the relationship between the quantity of the surplus hydraulic oil and the operating amount (stroke) of depressing the clutch pedal 91 is obtained in advance through an experiment or a simulation, and the relationship is mapped and stored in the ROM of the clutch ECU 200. Then, the quantity of the surplus hydraulic oil is applied to the map, so that the operating amount of depressing the clutch pedal 91 (the operating amount of depressing the clutch pedal 91 to be instructed to the driver) is extracted and the display panel in the instrument panel 7 displays the amount of the depressing operation. As a specific form of the displaying, "Please depress the clutch pedal 30% in order to adjust the quantity of hydraulic oil of the clutch" or the like is displayed.

Thereafter, the procedure proceeds to Step ST11, and the clutch ECU 200 determines whether or not the driver has performed the operation of depressing the clutch pedal 91 by the predetermined amount as instructed by the clutch ECU 200. The determination is made based on an output signal from the clutch pedal stroke sensor 201.

When the operating amount of depressing the clutch pedal 91 performed by the driver does not reach the predetermined amount, and the determination result in Step ST11 is NO, the procedure returns to the starting step without any change.

In the following routine, since the first operating mechanism malfunction flag is set to "1" in the previous routine, the determination result in Step ST1 becomes YES, and the procedure proceeds to Step ST18. In Step ST18, the clutch ECU 200 determines whether or not the hydraulic oil quantity balance flag is set to "1". In the circumstances where surplus hydraulic oil is present, the hydraulic oil quantity balance flag is reset to "0". Thus, the determination result in Step ST18 becomes NO, and the procedure proceeds to Step ST19. In Step ST19, the clutch ECU 200 determines whether or not the withdrawing operation instruction flag stored in the clutch ECU 200 in advance is set to "1". The withdrawing operation instruction flag is set to "1" when the instrument panel 7 displays the instruction to perform the operation of withdrawing the clutch pedal 91.

Before the vehicle starts travelling, the withdrawing operation instruction flag is reset to "0". Thus, the determination result in Step ST19 becomes NO, and the procedure proceeds to Step ST10. Then, the displaying urging the driver to perform the operation of depressing the clutch pedal 91 continues.

When the operating amount of depressing the clutch pedal 91 performed by the driver reaches the predetermined amount, and the determination result in Step ST11 is YES, the procedure proceeds to Step ST12, and the hydraulic oil discharge valve 342 is closed. Accordingly, the pedal side oil pressure path 334 is in a state of being blocked from the hydraulic oil discharge path 336. That is, when the operating amount of depressing the clutch pedal 91 reaches the predetermined amount, surplus hydraulic oil is discharged toward the reservoir tank 84d of the clutch master cylinder 84. Accordingly, since the quantities of the hydraulic oil in the reservoir tanks 84d, 92d are balanced, the hydraulic oil discharge valve 342 is closed, and the pedal side oil pressure path 334 is blocked from the hydraulic oil discharge path 336.

When the operation of depressing the clutch pedal 91 is performed, the third valve 331f is opened, and the clutch master cylinder 92 and the CSC side oil pressure path 332 are in a state of communicating with each other. However, reaction force against pressure causing the release bearing 26 to move forward acts in the CSC side oil pressure path 332 by the diaphragm spring 25. Thus, most of the hydraulic oil discharged from the clutch master cylinder 92 through the operation of depressing the clutch pedal 91 is not sent to the CSC side oil pressure path 332 and is sent to the reservoir tank 84d via the hydraulic oil discharge path 336.

Thereafter, the procedure proceeds to Step ST13, and the display panel in the instrument panel 7 performs displaying, urging the driver to withdraw the clutch pedal 91 (cancellation of the depressing operation). As a specific form of the displaying, "Adjusting the quantity of hydraulic oil of the clutch has been completed. Please withdraw the clutch pedal" or the like is displayed.

Thereafter, in Step ST14, the withdrawing operation instruction flag is set to "1".

In this manner, the procedure proceeds to Step ST15 in a state where the displaying urging the withdrawing is performed, and the clutch ECU 200 determines whether or not the driver has performed the operation of withdrawing the clutch pedal 91 as instructed by the clutch ECU 200. The determination is made based on an output signal from the clutch pedal stroke sensor 201.

When the driver has not performed the operation of withdrawing the clutch pedal 91, and the determination result in Step ST15 is NO, the procedure returns to the starting step without any change.

In the following routine, since the first operating mechanism malfunction flag is set to "1" in the previous routine, the hydraulic oil quantity balance flag is reset to "0", and the withdrawing operation instruction flag is set to "1 ". Thus, the determination result in Step ST1 becomes YES, the determination result in Step ST18 becomes NO, the determination result in Step ST19 becomes YES, and the procedure proceeds to Step ST13. That is, the displaying urging the driver to perform the operation of withdrawing the clutch pedal 91 continues.

Then, when the driver performs the operation of withdrawing the clutch pedal 91, and the determination result in Step ST15 is YES, the procedure proceeds to Step ST16. Then, the displaying urging the driver to perform the withdrawing operation is stopped, and the withdrawing operation instruction flag is reset to "0".

Thereafter, the procedure proceeds to Step ST17, the hydraulic oil quantity balance flag is set to "1", and the procedure returns to the starting step.

Such an operation is repetitively performed every predetermined time.

When the first operating mechanism malfunction flag is set to "1" and the MIL is lit as described above, the vehicle is sent to a car dealer, a repair shop, or the like, and maintenance for the first operating mechanism 310 is performed. At this time, when the maintenance ends, a worker performs an operation of rewriting data of the clutch ECU 200, so that both the first operating mechanism malfunction flag and the hydraulic oil quantity balance flag are reset to "0".

Since such an operation is performed, the operation in Step ST5 (switching operation of the valves 331d, 331e, 331f) corresponds to the operation of the electronic control unit, that is, "the operation of controlling the switching mechanism such that the circulation path of the hydraulic fluid communicating with the fluid pressure chamber switches from the first circulation path to the second circulation path when the electronic control unit determines that there is an occurrence of abnormality in actuation of the clutch actuator".

In addition, the operation from Steps ST7 to ST12 corresponds to the operation of the electronic control unit, that is, "the operation of causing the communication portion to switch to the state where the first circulation path and the second circulation path communicate with each other when the electronic control unit determines that there is an occurrence of abnormality in actuation of the clutch actuator, and causing the communication portion to switch to the state where the first circulation path and the second circulation path are blocked (or disconnected) from each other, when the supplying quantity of the hydraulic oil (hydraulic fluid) that has been supplied to the clutch device through the first circulation path when there is an occurrence of abnormality in actuation of the clutch actuator, and the discharging quantity of the hydraulic oil (hydraulic fluid) flowing from the hydraulic cylinder provided in the second circulation path toward the reservoir tank of the hydraulic cylinder provided in the first circulation path, become equal to each other".

In addition, the operation in Step ST10 corresponds to the operation of the operation instruction portion, that is, "the operation of instructing the driver of the vehicle to perform the operation of depressing the clutch pedal in order to discharge the hydraulic oil (hydraulic fluid)".

As described above, in the embodiment, when the electronic control unit 200 determines that there is an occurrence of abnormality in actuation of the clutch actuator 8, the first switching mechanism 331 is controlled such that switching between the circulation paths 330A, 330B is performed, that is, the circulation path of the hydraulic fluid communicating with the oil pressure chamber (fluid pressure chamber) switches from the first circulation path 330A to the second circulation path 330B. Accordingly, the oil pressure (fluid pressure) obtained from operating force of the clutch pedal 91 generated by the driver can be in a state of being able to be supplied to the oil pressure chamber of the clutch device 2, and the clutch device 2 can be operated. That is, even when there is an occurrence of abnormality in actuation of the clutch actuator 8, the clutch device 2 can be operated in accordance with the operating amount of the clutch pedal 91.

In addition, in the embodiment, when the circulation path of the hydraulic fluid communicating with the oil pressure chamber switches from the first circulation path 330A to the second circulation path 330B, the hydraulic oil discharge valve 342 is opened, and the first circulation path 330A and the second circulation path 330B communicate with each other. The hydraulic oil discharge valve 342 is closed when the supplying quantity of the hydraulic oil that has been supplied from the first circulation path 330A to the clutch device 2 when the abnormality occurs, and the discharging quantity of the hydraulic oil flowing from the clutch master cylinder 92 provided in the second circulation path 330B toward the reservoir tank 84d of the clutch master cylinder 84 provided in the first circulation path 330A, become equal to each other. Then, the first circulation path 330A and the second circulation path 330B are blocked from each other. Accordingly, the surplus quantity of the hydraulic oil that has been collected in the clutch master cylinder 92 in the second circulation path 330B from the clutch device 2 is discharged to the clutch master cylinder 84 in the first circulation path 330A in accordance with the switching between the circulation paths 330A, 330B. Thus, even when an imbalance is caused between the quantities of the hydraulic oil in the reservoir tanks 84d, 92d of the clutch master cylinders 84, 92, the imbalance can be resolved. As a result, replacing or repairing the clutch actuator 8 will be the only maintenance work to be performed after abnormality occurs. Since there is no need to replace the clutch master cylinder 92 in the second circulation path 330B, the maintenance work can be simplified compared to the configuration in the related art. In addition, if abnormality in actuation of the clutch actuator 8 is automatically resolved (if the first operating mechanism 310 is automatically restored), since the quantities of the hydraulic oil in the reservoir tanks 84d, 92d of the clutch master cylinders 84, 92 are balanced, there is no need to particularly perform the maintenance, so that the clutch device 2 can recover the state of being operated by the first operating mechanism 310.

Moreover, in the embodiment, the driver of the vehicle is instructed regarding the operating amount (stroke) of depressing the clutch pedal 91 corresponding to the supplying quantity of the hydraulic oil that has been supplied to the clutch device 2 through the first circulation path 330A when abnormality occurs (supplying quantity of the hydraulic oil that becomes surplus hydraulic oil). Accordingly, the driver can recognize the operating amount of depressing the clutch pedal 91 in advance when an imbalance between the quantities of the hydraulic oil is resolved. Therefore, the driver stops depressing the clutch pedal in the vicinity of an operational position of depressing the clutch pedal 91, the position where the imbalance between the quantities of the hydraulic oil is resolved. Thus, it is possible to appropriately obtain the quantity of the hydraulic oil in the reservoir tanks 84d, 92d when the hydraulic oil discharge valve 342 is closed, and the first circulation path 330A and the second circulation path 330B are blocked from each other.

### Second Embodiment

Subsequently, a second embodiment will be described. The configuration of a switching mechanism of the second embodiment is different from that of the first embodiment. Specifically, the embodiment has a configuration provided with a switching valve that includes both the function of the first switching mechanism 331 and the function of the second switching mechanism 341 in the first embodiment. Since other configurations and operations are similar to those of the first embodiment, only the configuration and the operation of the switching mechanism will be described here.

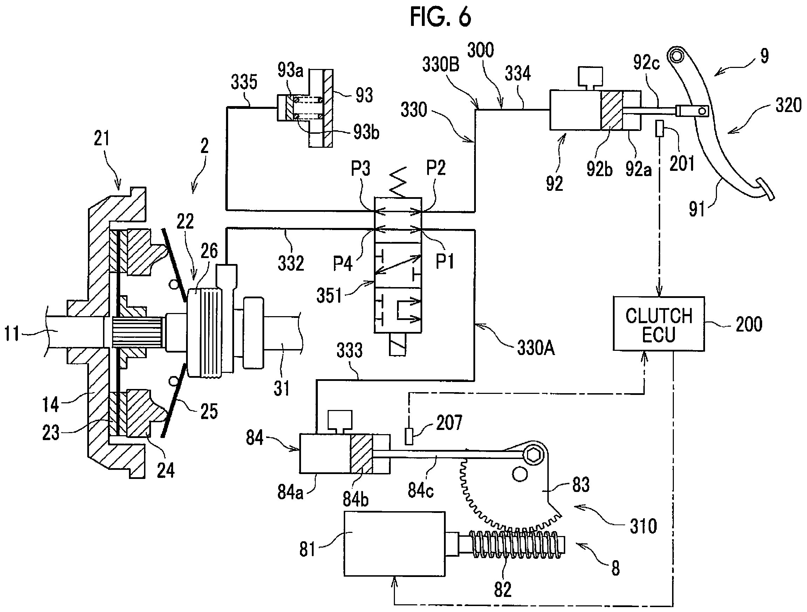

FIG. 6 is a view illustrating a schematic configuration of a clutch system in its entirety in the second embodiment. As illustrated in FIG. 6, in the clutch system of the second embodiment, the switching mechanism is configured to include a switching valve 351 formed of a four-port three-position directional control valve. Similar to the first switching mechanism 331 of the first embodiment, the switching valve 351 is provided with four ports, that are first to fourth ports P1, P2, P3, P4.

In addition, similar to the configuration of the first embodiment, the first port P1 communicates with the clutch master cylinder 84 of the clutch actuator 8 via the actuator side oil pressure path 333. The second port P2 communicates with the clutch master cylinder 92 of the clutch pedal unit 9 via the pedal side oil pressure path 334. The third port P3 communicates with the reaction force generating mechanism 93 via the reaction force generating side oil pressure path 335. The fourth port P4 communicates with the oil pressure chamber of the CSC 22 via the CSC side oil pressure path 332.

Then, in the switching valve 351, the valve position of a spool valve piece electrically switches among a first switching position to a third switching position by a solenoid.

At the first switching position (state where the spool valve piece moves to a lower end position as illustrated in FIG. 6), the first port P1 and the fourth port P4 communicate with each other, and the second port P2 and the third port P3 communicate with each other. Accordingly, the CSC side oil pressure path 332 and the actuator side oil pressure path 333 are in a state of communicating with each other, and the pedal side oil pressure path 334 and the reaction force generating side oil pressure path 335 are in a state of communicating with each other.

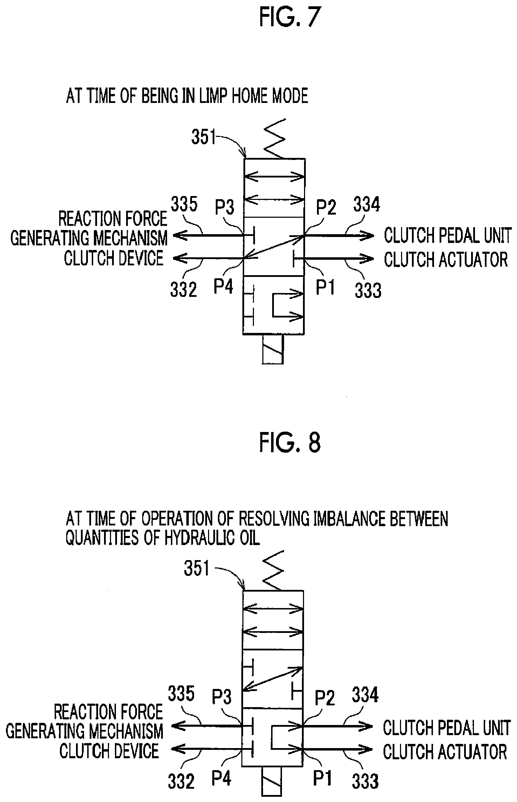

In addition, as illustrated in FIG 7, at the second switching position (state where the spool valve piece moves to an intermediate position), the second port P2 and the fourth port P4 communicate with each other, and the first port P1 and the third port P3 are blocked from all of the ports. Accordingly, the CSC side oil pressure path 332 and the pedal side oil pressure path 334 are in a state of communicating with each other.

In addition, as illustrated in FIG. 8, at the third switching position (state where the spool valve piece moves to an upper end position), the first port P1 and the second port P2 communicate with each other, and the third port P3 and the fourth port P4 are blocked from all of the ports. Accordingly, the pedal side oil pressure path 334 and the actuator side oil pressure path 333 are in a state of communicating with each other.

In addition, when there is no occurrence of abnormality in actuation of the clutch actuator 8, the switching valve 351 is at the first switching position, and the clutch device 2 is in a state of being operated by the first operating mechanism 310. That is, the circulation path of the hydraulic fluid communicating with the oil pressure chamber (fluid pressure chamber) of the CSC 22 becomes the first circulation path 330A. Meanwhile, when there is an occurrence of abnormality in actuation of the clutch actuator 8, the switching valve 351 is at the second switching position, and the clutch device 2 is in a state of being operated by the second operating mechanism 320. That is, the circulation path of the hydraulic fluid communicating with the oil pressure chamber (fluid pressure chamber) of the CSC 22 becomes the second circulation path 330B.

Then, when the operation of resolving an imbalance between the quantities of the hydraulic oil is executed, the switching valve 351 is at the third switching position. When the driver performs an operation of depressing the clutch pedal 91 in the state, the surplus quantity of the hydraulic oil that has been collected in the clutch master cylinder 92 of the second operating mechanism 320 from the clutch device 2 in accordance with the switching between the operating mechanisms 310, 320 is discharged to the clutch master cylinder 84 of the first operating mechanism 310. Therefore, even when an imbalance is caused between the quantities of the hydraulic oil in the reservoir tanks 84d, 92d of the clutch master cylinders 84, 92, the imbalance can be resolved.

Other configurations and operations are similar to those of the first embodiment.

In the second embodiment, it is possible to exhibit an effect similar to the case of the first embodiment. In addition, in the second embodiment, there is no need to provide the second switching mechanism 341 of the first embodiment.

### Other Embodiments

The aspects of the invention are not limited to each of the embodiments, and it is possible to perform all of changes and applications included in the aspects of the invention within a scope equal to the scope of the aspects.

For example, in each of the embodiments, descriptions have been given regarding a case where the invention is applied to the FF vehicle. However, the aspects of the invention can also be applied to a front engine rear drive (FR) vehicle, a mid-ship vehicle, and a four-wheel drive (4WD) vehicle. In addition, the gear shifting device 3 having six forward gears has been described as an example. However, the aspects of the invention are not limited the example. The number of gears can be arbitrarily set.

In addition, in each of the embodiments, descriptions have been given regarding a case where the internal combustion engine is a gasoline engine. The aspects of the invention are not limited to the case. A different type of an internal combustion engine, such as a diesel engine may be employed. In addition, the aspects of the invention can also be applied to a hybrid vehicle in which an internal combustion engine and an electric motor are mounted as driving force sources, and an electric automobile in which only an electric motor is mounted as a driving force source.

In addition, in each of the embodiments, descriptions have been given regarding the clutch device 2 actuated by the CSC 22. The aspects of the invention are not limited to the example. The aspects of the invention can also be applied to a known release fork-type clutch device in which a release bearing is moved by a release fork.

The aspects of the invention can be applied to controlling a clutch-by-wire system provided with a fail-safe function.

## Claims

1. A clutch operation device configured to adjust fluid pressure inside a fluid pressure chamber of a clutch device installed in a power transmission path between a driving force source and a gear shifting device and the clutch operation device being configured to cause the clutch device to operate between an engagement state and a disengagement state, the clutch operation device comprising:
a clutch actuator;
a clutch pedal (91) configured to be operated by a driver;
a first circulation path (330A) configured to connect to the fluid pressure chamber in response to actuation of the clutch actuator such that hydraulic fluid flows between the first circulation path (330A) and the fluid pressure chamber to adjust the fluid pressure;
a second circulation path (330B) configured to connect to the fluid pressure chamber in response to operating force of the clutch pedal (91) such that the hydraulic fluid flows between the second circulation path (330B) and the fluid pressure chamber to adjust the fluid pressure;
a switching mechanism (331) configured to cause a flow path of hydraulic fluid communicating with the fluid pressure chamber to switch between the first circulation path (330A) and the second circulation path (330B);
an electronic control unit (200) configured to control the switching mechanism (331) such that a flow path of hydraulic fluid communicating with the fluid pressure chamber switches from the first circulation path (330A) to the second circulation path (330B) when the electronic control unit (200) determines that there is an occurrence of abnormality in actuation of the clutch actuator; and
a communication portion (341, 342, 336, 343) configured to be switchable between a state where the first circulation path (330A) and the second circulation path (330B) communicate with each other and a state where the first circulation path (330A) and the second circulation path (330B) are disconnected from each other, wherein:
the electronic control unit (200) is configured to switch the communication portion (341, 342, 336, 343) to the state where the first circulation path (330A) and the second circulation path (330B) communicate with each other, when the electronic control unit (200) determines that there is an occurrence of abnormality in actuation of the clutch actuator; and
the electronic control unit (200) is configured to switch the communication portion (341, 342, 336, 343) to the state where the first circulation path (330A) and the second circulation path (330B) are disconnected from each other, when a supplying quantity of hydraulic fluid supplied to the clutch device through the first circulation path (330A) when abnormality occurs in actuation of the clutch actuator, and a discharging quantity of hydraulic fluid discharged from a hydraulic cylinder (92) provided in the second circulation path (330B) toward a reservoir tank (84d) of a hydraulic cylinder (84) provided in the first circulation path (330A), become equal to each other.

2. The clutch operation device according to claim 1, wherein:
the communication portion (341, 342, 336, 343) is configured to utilize operating force by which the clutch pedal (91) is depressed and to discharge hydraulic fluid from the hydraulic cylinder (92) in the second circulation path (330B) toward the reservoir tank (84d) of the hydraulic cylinder (84) in the first circulation path (330A) via the communication portion (341, 342, 336, 343) when the first circulation path (330A) and the second circulation path (330B) communicate with each other; and
the clutch operation device further comprises:
an operation instruction portion configured to instruct a driver of a vehicle to depress the clutch pedal (91) such that the hydraulic fluid is discharged.

3. The clutch operation device according to claim 2, wherein the operation instruction portion is configured to instruct a driver of the vehicle to depress the clutch pedal by an operation stroke of the clutch pedal (91) corresponding to the supplying quantity of hydraulic fluid supplied to the clutch device through the first circulation path (330A) when abnormality occurs in actuation of the clutch actuator.
